# EUROPÄISCHE PATENTSCHRIFT

(11) **EP 0 626 457 B1**
(45) Veröffentlichungstag und Bekanntmachung des Hinweises auf die Patenterteilung: **26.08.1998**
(21) Anmeldenummer: 94201131.3
(22) Anmeldetag: 25.04.1994
(51) Int. Cl.: C22B 7/02, C22B 13/02, C22B 19/28

(54) **Verfahren zur Aufarbeitung von Zink und Blei enthaltenden Hüttenwerks-Reststoffen**
Method for working up zinc- and lead-bearing steel plant residues
Procédé de traitement des matières résiduelles sidérurgiques contenant du zinc et du plomb

(30) Priorität: 27.05.1993 DE 4317578
(43) Veröffentlichungstag der Anmeldung: 30.11.1994
(73) Patentinhaber: METALLGESELLSCHAFT AKTIENGESELLSCHAFT, 60323 Frankfurt am Main (DE)
(72) Erfinder: Bresser, Wolfgang, D-63762 Grossostheim (DE); Hirsch, Martin, Dr., D-61381 Friedrichsdorf (DE); Kaune, Albert, Dr., D-61476 Oberhöchstadt (DE); Härter, Uwe, D-46539 Dinslaken (DE)

(56) Entgegenhaltungen:
- EP-A- 0 434 120
- DE-B- 1 056 157
- FR-A- 2 373 612
- STEEL TIMES - INCORPORATING IRON & STEEL, Bd.220, Nr.3, März 1992, LONDON GB Seiten S19 - S21 KAUNE ET AL. 'Fluidised bed treatment of steelplant dust'

## Beschreibung

Die Erfindung betrifft ein Verfahren zur Aufarbeitung von Eisenoxide, Zink und Blei enthaltenden Hüttenwerks-Reststoffen durch thermische Behandlung in einer zirkulierenden Wirbelschicht bei erhöhten Temperaturen und reduzierenden Bedingungen, wobei Zink und Blei verflüchtigt und höhere Eisenoxide maximal zum FeO reduziert werden, und verdampftes Zink und Blei aus dem Abgas nach einer Abkühlung abgeschieden werden, in den unteren Teil des Wirbelschichtreaktors der zirkulierenden Wirbelschicht ein Fluidisierungsgas eingeleitet wird, im unteren Teil in der Wirbelschicht ein Gehalt an festem Kohlenstoff von 5 bis 30% eingestellt wird, das Reduktionspotential im unteren Teil des Wirbelschichtreaktors durch Wahl der Menge und Zusammensetzung des Fluidisierungsgases so eingestellt wird, daß mindestens 80% des Eisengehaltes als Fe²⁺, maximal 1% als metallisches Eisen und der Rest als Fe³⁺ vorliegen, in den oberen Teil des Wirbelschichtreaktors sauerstoffhaltiges Sekundärgas eingeleitet wird, festes kohlenstoffhaltiges Material in den unteren Teil de Wirbelschichtreaktors unterhalb der Zufuhrstelle des Sekundärgases eingeleitet wird, jedoch die CO₂-Bildung nur so weit geführt wird, daß metallisches Zink nicht reoxidiert wird, die aus dem oberen Teil des Wirbelschichtreaktors ausgetragene Suspension in den Rückführzyklon der zirkulierenden Wirbelschicht geleitet und dort weitgehend von Feststoff befreit wird, abgeschiedener Feststoff in den Wirbelschichtreaktor derart zurückgeleitet wird, daß innerhalb der zirkulierenden Wirbelschicht der stündliche Feststoffumlauf mindestens das 5-fache des im Wirbelschichtreaktor befindlichen Feststoffgewichtes beträgt, das aus dem Rückführzyklon austretende Gas auf eine Temperatur abgekühlt wird, bei der das metallische Zink zu ZnO oxidiert wird und die staubförmigen Zink- und Blei-Verbindungen aus dem Gas abgeschieden werden.

Ein solches Verfahren ist aus DE-A-3942337 bekannt. Als Fluidisierungsgas wird hierbei ein reduzierendes Gas verwendet.

Beim bekannten Verfahren wird der überwiegende Teil der für den Prozeß erforderlichen Wärmemenge durch direkte Verbrennung von festen Kohlen in der Wirbelschicht selbst erzeugt und trotzdem eine weitgehende Entzinkung erreicht. Dadurch kann die Aufarbeitung der Rückstände in sehr wirtschaftlicher Weise erfolgen.

Der Erfindung liegt die Aufgabe zugrunde, bei dem vorstehend genannten Verfahren die für das Verfahren erforderliche Wärme vollständig aus festen kohlenstoffhaltigen Materialien zu erzeugen. Die Aufgabe wird dem Patenanspruch 1 gemäß dadurch gelöst, daß als Fluidisierungsgas Luft in einer Menge in den Wirbelschichtreaktor eingeblasen wird, die 10 bis 50% der erforderlichen Sauerstoffmenge enthält und mit dem Sekundärgas die restliche Sauerstoffmenge eingebracht wird, festes kohlenstoffhaltiges Material mit hoher und mit niedriger Reaktivität in den unteren Teil des Wirbelschichtreaktors unterhalb der Zufuhrstelle des Sekundärgases eingeleitet wird, wobei man als Material mit niedriger Reaktivität gasarme oder entgaste Kohle mit weniger als 10% flüchtigen Bestandteilen verwendet, bis zu 20% des in den unteren Teil des Wirbelschichtreaktors eingetragenen kohlenstoffhaltigen Materials aus kohlenstoffhaltigem Material mit niedriger Reaktivität besteht, die Menge des zugesetzten festen kohlenstoffhaltigen Materials so eingestellt wird, daß durch vorwiegende Verbrennung des kohlenstoffhaltigen Materials mit hoher Reaktivität bei einem CO/CO₂-Verhältnis von 0,5 bis 1,5 eine Temperatur von 900 bis 1100°C eingestellt wird. Das Sekundärgas kann aus Luft sauerstoffangereicherter Luft oder Sauerstoff bestehen. Beim kohlenstoffhaltigen Material mit niedriger Reaktivität kann es sich z.B. um Koks, Koksgrus oder Petrolkoks handeln.

Der Patentanspruch 2 betrifft eine selbständige Lösung der Aufgabenstellung, wobei der überwiegende Teil des Abgases nach einer Entfernung von Wasserdampf und CO₂ als Fluidisierungsgas in den Wirkelschichtreaktor rezirkuliert wird. Als Sekundärgas wird ein Gas mit mehr als 50 Vol.% Sauerstoff verwendet.

Als Hüttenwerks-Reststoffe kommen insbesondere Gichtgasstäube, Konverterstäube und Elektroofenstäube aus der Eisen- und Stahlherstellung infrage. Beim Einsatz von Rückständen aus der Zink-Elektrolyse muß ein Jarosit-Rückstand vor dem Einsatz einer Sulfatspaltung unterworfen werden. Die Reststoffe können mit einer Korngröße bis zu etwa 3 mm eingesetzt werden. Die untere Zone der Wirbelschicht im Wirbelschichtreaktor wird stärker reduzierend betrieben als die obere Zone. Die untere Zone erstreckt sich bis zu 30% der Höhe des Wirbelschichtreaktors. Der Gehalt an festem Kohlenstoff im Wirbelbett der unteren Zone wird auf 5 bis 30% eingestellt. Falls metallisches Eisen durch das Eintragsmaterial in die obere Zone gelangt, wird dieses zu über 80% zu Fe²⁺ oxidiert, der zu Fe³⁺ und es verbleiben maximal 1% als metallisches Eisen, d.h., es wirkt als Brennstoff. Die Temperatur im Wirbelschichtreaktor wird vorzugsweise auf 1000 bis 1050°C eingestellt. Die mittlere Feststoffdichte in der unteren Zone beträgt 300 bis 600 kg/m³ und in der oberen Zone 5 bis 50 kg/m³.

Die Hüttenwerks-Reststoffe werden bevorzugt in die obere Zone aufgegeben. Ein Teil des Wärmebedarfs wird durch Verbrennung von reduzierendem Gas gedeckt. Ein Teil kann durch die Verbrennung von metallischem Eisen gedeckt werden, wenn metallisches Eisen in dem Aufgabegut vorhanden ist. Neben Zink und Blei werden Alkalien und z.B. Chlor verflüchtigt. Eventuell mit dem Aufgabegut eingetragenes Öl wird verdampft und wirkt als Brennstoff. Der Austrag des festen Materials erfolgt kontinuierlich aus dem unteren Teil des Wirbelschichtreaktors oder aus der Rückführleitung. Die Kühlung des aus dem Rückführzyklon austretenden Gases erfolgt durch Wasser-Eindüsung und/oder indirekten Wärmeaustausch. Die für die Reoxidation des metallischen Zinks erforderliche Temperatur ist abhängig vom CO-Gehalt im CO/CO₂-Gemisch. Die zirkulierende Wirbelschicht besteht aus dem Wirbelschichtreaktor, dem Rückführzyklon und der Rückführleitung für den im Rückführzyklon abgeschiedenen Feststoff. Der Ausdruck "Rückführzyklon" beinhaltet einen Rückführzyklon oder auch mehrere gasseitig parallel geschaltete Rückführzyklone.

Der Vorteil der Erfindung besteht darin, daß das Verfahren nicht von externen Gasquellen für das Reduktionsgas abhängig ist. Die Verfügbarkeit von möglichst CH₄ -freiem Gas ist sehr beschränkt. CH₄ setzt sich schlecht um.

Eine vorzugsweise Ausgestaltung besteht darin, daß ein Teil des kohlenstoffhaltigen Material mit hoher Reaktivität in einer Korngröße unter 10 mm und das kohlenstoffhaltige Material mit niedriger Reaktivität in einer Korngröße unter 2 mm eingesetzt wird. Mit diesen Korngrößen werden besonders gute Ergebnisse erzielt, und das kohlenstoffhaltige Material mit hoher Reaktivität muß nicht weiter zerkleinert werden, da es in der Wirbelschicht zerfällt.

Eine Ausgestaltung besteht darin, daß ein Teil des kohlenstoffhaltigen Materials in einer Korngröße unter 1 mm mit den Reststoffen vermischt wird, der Zusatz an kohlenstoffhaltigem Material maximal 10 Gew.-% der Mischung beträgt, und die Mischung einer Mikro-Agglomeration unterworfen wird. Für die Agglomeration muß ein Wassergehalt von etwa 10 bis 17 Gew.-% eingestellt werden und bei der Agglomeration muß eine Zugabe von Wasser erfolgen. Wenn das Material bereits einen zu hohen Wassergehalt enthält, wird durch den Zusatz des kohlenstoffhaltigen Materials der gewünschte Wassergehalt eingestellt. Vorzugsweise wird kohlenstoffhaltiges Material mit niedriger Reaktivität eingesetzt und dadurch die Bildung von metallischem Eisen vermieden.

Eine Ausgestaltung besteht darin, daß feinkörniger, ölhaltiger Walzenzunder zugesetzt wird. Der Zusatz kann in Mischung mit den Reststoffen oder separat erfolgen. Auf diese Weise kann der Walzenzunder in einfacher und wirtschaftlicher Weise entsorgt werden.

Die Erfindung wird anhand einer Figur und eines Beispieles näher erläutert.

Die zirkulierende Wirbelschicht besteht aus dem Wirbelschichtreaktor (1), dem Rückführzyklon (2) und der Rückführleitung (3). Die Hüttenwerks-Reststoffe werden nach einer Mikro-Agglomeration (4) über Leitung (5) in den Wirbelschichtreaktor (1) eingetragen. Kohle wird über Leitung (6) in den Wirbelschichtreaktor (1) eingetragen. Luft wird über Leitung (7) in den indirekten Wärmeaustauscher (8) geleitet, dort vorgewärmt und über Leitung (9) als Fluidisierungsgas in den Wirbelschichtreaktor (1) eingeleitet. Über Leitung (10) wird Luft in den indirekten Wärmeaustauscher (11) geleitet, dort vorgewärmt und über Leitung (12) als Sekundärgas in den Wirbelschichtreaktor (1) eingeleitet. Die stärker reduzierend betriebene untere Zone der Wirbelschicht im Wirbelschichtreaktor (1) erstreckt sich etwa bis zur Zufuhrstelle (12) für das Sekundärgas. Die aus dem Wirbelschichtreaktor (1) ausgetragene Gas-Feststoff-Suspension wird im Rückführzyklon (2) weitgehend vom Feststoff befreit. Der abgetrennte Feststoff wird über die Rückführleitung (3) in den Wirbelschichtreaktor (1) zurückgeführt. Das Gas aus dem Rückführzyklon (2) wird über Leitung (13) in den Abscheidezyklon (14) geleitet und dann über Leitung (15) in den Verdampfungskühler (16) geleitet. Über Leitung (17) wird Wasser in den Verdampfungskühler (16) eingedüst. Über Leitung (18) wird das Gas aus dem Verdampfungskühler (16) in den Filter (19) geleitet und aus diesem über Leitung (20) zum Gasverbund geleitet. Über Leitung (21) wird der im Verdampfungskühler (16) und im Filter (19) abgeschiedene zink- und bleihaltige Staub zur Weiterverarbeitung abgeführt. Über Leitung (22) wird Feststoff aus dem Wirbelschichtreaktor (1) und über Leitung (23) der im Abscheidezyklon (14) abgeschiedene Feststoff in eine Kühlung (24) geleitet und aus dieser über Leitung (25) zur Sinteranlage geführt.

### Beispiel

Eine Mischung aus Gichtschlamm, Konverterstaub und EGR-Staub aus einer Sinteranlage wurde in einer Granulierung zu Mikro-Granalien mit 0,1 bis 3 mm Korngröße granuliert. Der Wassergehalt betrug 16,3 Gew.-%. Der Wirbelschichtreaktor der zirkulierenden Wirbelschicht hatte eine Höhe von 15 m und einen Durchmesser von 2,6 m. Die Aufgabe betrug 13,5 t/h Mikrogranalien und 6,2 t/h Kohlen, die aus 10 % Koksgruß und 90 % Gasflammkohle mit 30 % flüchtigen Bestandteilen bestanden. Als Fluidisierungsgas wurden 13 000 Nm/h Luft mit 600°C eingeleitet. Als Sekundärgas wurden 12 000 Nm³/h Luft mit 700°C eingeleitet. Die Temperatur im Wirbelschichtreaktor betrug 1020°C. Das Abgas nach dem Abscheidezyklon betrug 39 350 Nm³/h und enthielt 11 % CO, 9 % CO₂, 10 % H₂, 15 % H₂O und 54 % N₂. In den Verdampfungskühler wurden 18 t/h Wasser eingedüst. Die Austrittstemperatur des Gases aus dem Verdampfungskühler betrug 220°C. 62 900 Nm³/h Abgas verließen das Filter. 2,3 t/h Staub mit 22 % Zn + Pb, 20 % C, 34 % FeO und 10 % Fe₂O₃ wurden im Verdampfungskühler und Filter abgeschieden. Aus dem Wirbelschichtreaktor und dem Abscheidezyklon wurden 23,2 t/h Feststoff mit 0,3 % Zn und 9,1 % C abgezogen.

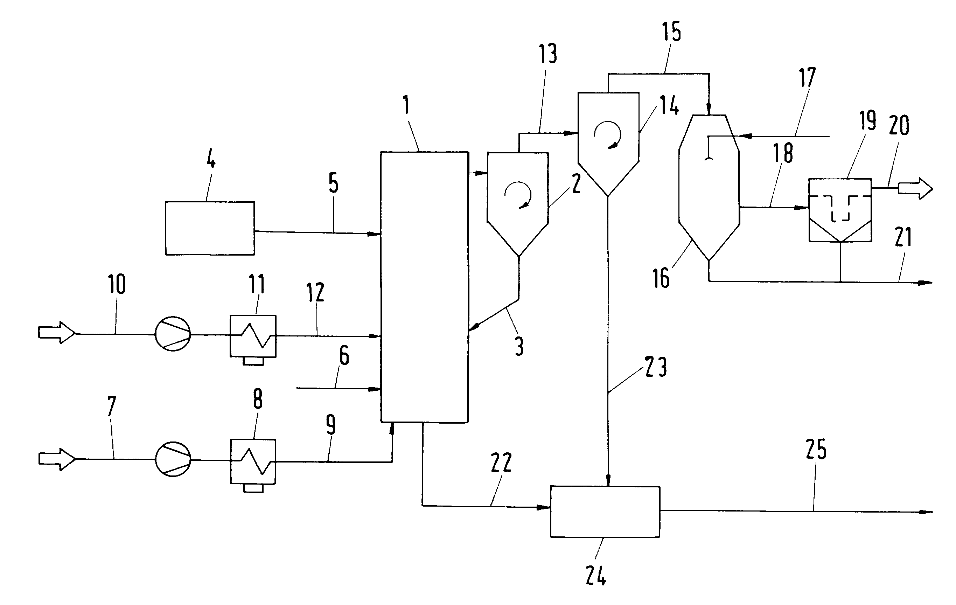

## Patentansprüche

1. Verfahren zur Aufarbeitung von Eisenoxide, Zink und Blei enthaltenden Hüttenwerks-Reststoffen durch thermische Behandlung in einer zirkulierenden Wirbelschicht bei. erhöhten Temperaturen und reduzierenden Bedingungen, wobei Zink und Blei verflüchtigt und höhere Eisenoxide maximal zu FeO reduziert werden, und verdampftes Zink und Blei aus dem Abgas nach einer Abkühlung abgeschieden werden, in den unteren Teil des Wirbelschichtreaktors der zirkulierenden Wirbelschicht ein Fluidisierungsgas eingeleitet wird, im unteren Teil in der Wirbelschicht ein Gehalt an festem Kohlenstoff von 5 bis 30% eingestellt wird, das Reduktionspotential im unteren Teil des Wirbelschichtreaktors durch Wahl der Menge und Zusammensetzung des Fluidisierungsgases so eingestellt wird, daß mindestens 80% des Eisengehaltes als Fe²⁺, maximal 1% als metallisches Eisen und der Rest als Fe³⁺ vorliegen, in den oberen Teil des Wirbelschichtreaktors sauerstoffhaltiges Sekundärgas eingeleitet wird, festes kohlenstoffhaltiges Material in den unteren Teil des Wirbelschichtreaktors unterhalb der Zufuhrstelle des Sekundärgases eingeleitet wird, jedoch die CO₂-Bildung nur so weit geführt wird, daß metallisches Zink nicht reoxidiert wird, die aus dem oberen Teil des Wirbelschichtreaktors ausgetragene Suspension in den Rückführzyklon der zirkulierenden Wirbelschicht geleitet und dort weitgehend von Feststoff befreit wird, abgeschiedener Feststoff in den Wirbelschichtreaktor derart zurückgeleitet wird, daß innerhalb der zirkulierenden Wirbelschicht der stündliche Feststoffumlauf mindestens das 5-fache des im Wirbelschichtreaktor befindlichen Feststoffgewichtes beträgt, das aus dem Rückführzyklon austretende Gas auf eine Temperatur abgekühlt wird, bei der das metallische Zink zu ZnO oxidiert wird und die staubförmigen Zink- und Blei-Verbindungen aus dem Gas abgeschieden werden, dadurch gekennzeichnet, daß als Fluidisierungsgas Luft in einer Menge in den Wirbelschichtreaktor eingeblasen wird, die 10 bis 50% der erforderlichen Sauerstoffmenge enthält und mit dem Sekundärgas die restliche Sauerstoffmenge eingebracht wird, festes kohlenstoffhaltiges Material mit hoher und mit niedriger Reaktivität in den unteren Teil des Wirbelschichtreaktors unterhalb der Zufuhrstelle des Sekundärgases eingeleitet wird, wobei man als Material mit niedriger Reaktivität gasarme oder entgaste Kohle mit weniger als 10% flüchtigen Bestandteilen verwendet, daß bis zu 20% des in den unteren Teil des Wirbelschichtreaktors eingetragenen kohlenstoffhaltigen Materials aus kohlenstoffhaltigem Material mit niedriger Reaktivität besteht, die Menge des zugesetzten festen kohlenstoffhaltigen Materials so eingestellt wird, daß durch vorwiegende Verbrennung des kohlenstoffhaltigen Materials mit hoher Reaktivität bei einem CO/CO₂-verhältnis von 0,5 bis 1,5 eine Temperatur von 900 bis 1100°C eingestellt wird.

2. Verfahren zur Aufarbeitung von Eisenoxide, Zink und Blei enthaltenden Hüttenwerks-Reststoffen durch thermische Behandlung in einer zirkulierenden Wirbelschicht bei erhöhten Temperaturen und reduzierenden Bedingungen, wobei Zink und Blei verflüchtigt und höhere Eisenoxide maximal zu FeO reduziert werden, und verdampftes Zink und Blei aus dem Abgas nach einer Abkühlung abgeschieden werden, in den unteren Teil des Wirbelschichtreaktors der zirkulierenden Wirbelschicht ein reduzierendes Fluidisierungsgas eingeleitet wird, das praktisch keinen freien Sauerstoff enthält, im unteren Teil in der Wirbelschicht ein Gehalt an festem Kohlenstoff von 5 bis 30% eingestellt wird, das Reduktionspotential im unteren Teil des Wirbelschichtreaktors durch Wahl der Menge und Zusammensetzung des Fluidisierungsgases so eingestellt wird, daß mindestens 80% des Eisengehalts als Fe²⁺, maximal 1% als metallisches Eisen und der Rest als Fe³⁺ vorliegen, in den oberen Teil des Wirbelschichtreaktors sauerstoffhaltiges Sekundärgas eingeleitet wird, durch Verbrennung von festem Kohlenstoff der Wärmebedarf zum überwiegenden Teil gedeckt wird, jedoch die CO₂ -Bildung nur so weit geführt wird, daß metallisches Zink nicht reoxidiert wird, die aus dem oberen Teil des Wirbelschichtreaktors ausgetragene Suspension in den Rückführzyklon der zirkulierenden Wirbelschicht geleitet und dort weitgehend von Feststoff befreit wird, abgeschiedener Feststoff in den Wirbelschichtreaktor derart zurückgeleitet wird, daß innerhalb der zirkulierenden Wirbelschicht der stündliche Feststoffumlauf mindestens das 5-fache des im Wirbelschichtreaktor befindlichen Feststoffgewichtes beträgt, das aus dem Rückführzyklon austretende Gas auf eine Temperatur abgekühlt wird, bei der das metallische Zink zu ZnO oxidiert wird und die staubförmigen Zink- und Bleiverbindungen aus dem Gas abgeschieden werden, dadurch gekennzeichnet, daß festes, kohlenstoffhaltiges Material mit hoher und mit niedriger Reaktivität in den unteren Teil des Wirbelschichtreaktors unterhalb der Zufuhrstelle des Sekundärgases eingeleitet wird, wobei man als Material mit niedriger Reaktivität gasarme oder entgaste Kohle mit weniger als 10% flüchtigen Bestandteilen verwendet, daß bis zu 20% des in den unteren Teil des Wirbelschichtreaktors eingetragenen kohlenstoffhaltigen Materials so eingestellt wird, daß durch vorwiegende Verbrennung des kohlenstoffhaltigen Materials mit hoher Reaktivität bei einem CO/CO₂-Verhältnis von 0,5 bis 1,5 eine Temperatur von 900 bis 1100°C eingestellt wird, und daß der überwiegende Teil des Abgases nach einer Entfernung von Wasserdampf und CO₂ als Fluidisierungsgas rezirkuliert wird, und als Sekundärgas ein sauerstoffhaltiges Gas mit mehr als 50 Vol.%-Sauerstoff eingeleitet wird.

3. Verfahren nach Anspruch 1 oder 2, dadurch gekennzeichnet, daß ein Teil des kohlenstoffhaltigen Materials mit hoher Reaktivität in einer Korngröße unter 10 mm und das kohlenstoffhaltige Material mit niedriger Reaktivität in einer Korngröße unter 2 mm eingesetzt wird.

4. Verfahren nach einem der Ansprüche 1 bis 3, dadurch gekennzeichnet, daß ein Teil des kohlenstoffhaltigen Materials in einer Korngröße unter 1 mm mit den Reststoffen vermischt wird, der Zusatz an kohlenstoffhaltigem Material maximal 10 Gew.-% der Mischung beträgt, und die Mischung einer Mikro-Agglomeration unterworfen wird.

5. Verfahren nach einem der Ansprüche 1 bis 4, dadurch gekennzeichnet, daß feinkörniger, ölhaltiger Walzenzunder zugesetzt wird.

## Claims

1. A method for regenerating residual metallurgical materials containing iron oxides, zinc and lead by heat treatment in a circulating fluidised bed at elevated temperatures and under reducing conditions, wherein zinc and lead are volatilised and higher iron oxides are reduced at most to FeO, and evaporated zinc and lead are separated off from the exhaust gas after cooling, a fluidising gas is introduced into the lower part of the fluidised bed reactor of the circulating fluidised bed, a content of solid carbon of 5 to 30% is set in the lower part in the fluidised bed, the reduction potential in the lower part of the fluidised bed reactor is set by selecting the quantity and composition of the fluidising gas such that at least 80% of the iron content is present as Fe²⁺, at most 1% as metallic iron and the remainder as Fe³⁺, oxygen-containing secondary gas is introduced into the upper part of the fluidised bed reactor, solid carbon-containing material is introduced into the lower part of the fluidised bed reactor beneath the feed point for the secondary gas, but the CO₂ formation is only effected to such an extent that metallic zinc is not reoxidised, the suspension discharged from the upper part of the fluidised bed reactor is passed into the recycle cyclone of the circulating fluidised bed and is largely freed of solids therein, solids separated off are returned to the fluidised bed reactor such that within the circulating fluidised bed the hourly circulation of solids is at least 5 times the weight of solids located in the fluidised bed reactor, the gas emerging from the recycle cyclone is cooled to a temperature at which the metallic zinc is oxidised to ZnO and the dust-like zinc and lead compounds are separated out from the gas, characterised in that as fluidising gas air is blown into the fluidised bed reactor in a quantity which contains 10 to 50% of the required quantity of oxygen and the rest of the quantity of oxygen is introduced with the secondary gas, solid carbon-containing material with high and with low reactivity is introduced into the lower part of the fluidised bed reactor beneath the feed point for the secondary gas, with low-gas or degasified coal having less than 10% volatile constituents being used as the material with low reactivity, that up to 20% of the carbon-containing material introduced into the lower part of the fluidised bed reactor consists of carbon-containing material with low reactivity, the quantity of the solid carbon-containing material added is adjusted such that by predominant combustion of the carbon-containing material with high reactivity at a CO/CO₂ ratio of 0.5 to 1.5 a temperature of 900 to 1100°C is set.

2. A method for regenerating residual metallurgical materials containing iron oxides, zinc and lead by heat treatment in a circulating fluidised bed at elevated temperatures and under reducing conditions, wherein zinc and lead are volatilised and higher iron oxides are reduced at most to FeO, and evaporated zinc and lead are separated off from the exhaust gas after cooling, a reducing fluidising gas which contains practically no free oxygen is introduced into the lower part of the fluidised bed reactor of the circulating fluidised bed, a content of solid carbon of 5 to 30% is set in the lower part in the fluidised bed, the reduction potential in the lower part of the fluidised bed reactor is set by selecting the quantity and composition of the fluidising gas such that at least 80% of the iron content is present as Fe²⁺, at most 1% as metallic iron and the remainder as Fe³⁺, oxygen-containing secondary gas is introduced into the upper part of the fluidised bed reactor, the heat requirement is predominantly covered by burning solid carbon, but the CO₂ formation is only effected to such an extent that metallic zinc is not reoxidised, the suspension discharged from the upper part of the fluidised bed reactor is passed into the recycle cyclone of the circulating fluidised bed and is largely freed of solids therein, solids separated off are returned to the fluidised bed reactor such that within the circulating fluidised bed the hourly circulation of solids is at least 5 times the weight of solids located in the fluidised bed reactor, the gas emerging from the recycle cyclone is cooled to a temperature at which the metallic zinc is oxidised to ZnO and the dust-like zinc and lead compounds are separated out from the gas, characterised in that solid carbon-containing material with high and with low reactivity is introduced into the lower part of the fluidised bed reactor beneath the feed point for the secondary gas, with low-gas or degasified coal having less than 10% volatile constituents being used as the material with low reactivity, that up to 20% of the carbon-containing material introduced into the lower part of the fluidised bed reactor is adjusted such that by predominant combustion of the carbon-containing material with high reactivity at a CO/CO₂ ratio of 0.5 to 1.5 a temperature of 900 to 1100°C is set, and that the predominant part of the exhaust gas after removal of water vapour and CO₂ is recirculated as fluidising gas, and an oxygen-containing gas with more than 50% by volume oxygen is introduced as secondary gas.

3. A method according to Claim 1 or 2, characterised in that a portion of the carbon-containing material with high reactivity is used in a grain size of less than 10 mm and the carbon-containing material with low reactivity is used in a grain size of less than 2 mm.

4. A method according to one of Claims 1 to 3, characterised in that a portion of the carbon-containing material in a grain size of less than 1 mm is mixed with the residual materials, the addition of carbon-containing material is at most 10% by weight of the mixture, and the mixture is subjected to micro-agglomeration.

5. A method according to one of Claims 1 to 4, characterised in that fine-grained, oil-containing roll scale is added.

## Revendications

1. Procédé de traitement de résidus d'usines sidérurgiques contenant des oxydes de fer, du zinc et du plomb, par traitement thermique dans un lit fluidisé circulant à haute température et dans des conditions réductrices, où le zinc et le plomb sont volatilisés et les oxydes de fer supérieurs sont réduits au maximum jusqu'à FeO, et le zinc et le plomb évaporés sont séparés de l'effluent gazeux après un refroidissement ; on introduit un gaz de fluidisation dans la partie inférieure du réacteur à lit fluidisé du lit fluidisé circulant ; on ajuste dans la partie inférieure du lit fluidisé une teneur en carbone solide de 5 à 30 % ; on ajuste le potentiel de réduction dans la partie inférieure du réacteur à lit fluidisé, grâce au choix de la quantité et de la composition du gaz de fluidisation, de façon qu'au moins 80 % du fer contenu se présentent sous forme de Fe²⁺, au maximum 1 % sous forme de fer métallique et le reste sous forme de Fe³⁺ ; on introduit dans la partie supérieure du réacteur à lit fluidisé un gaz secondaire contenant de l'oxygène ; on introduit un matériau contenant du carbone dans la partie inférieure du réacteur à lit fluidisé, en-dessous du point d'amenée du gaz secondaire, mais en ne poursuivant la formation du CO₂ que jusqu'à ce que le zinc métallique ne se réoxyde pas ; on envoie dans le cyclone de recyclage du lit fluidisé circulant la suspension soutirée de la partie supérieure du réacteur à lit fluidisé, et on l'y débarrasse presque complètement des matières solides ; on renvoie les matières solides ainsi séparées dans le réacteur à lit fluidisé de façon que, à l'intérieur du lit fluidisé circulant, le débit horaire de matière solide soit au moins cinq fois supérieur au poids de matières solides se trouvant dans le réacteur à lit fluidisé ; on refroidit le gaz sortant du cyclone de recyclage à une température à laquelle le zinc métallique est oxydé en ZnO et les composés du zinc et du plomb sous forme de poudre sont séparés du gaz, caractérisé en ce que en tant que gaz de fluidisation, on insuffle dans le réacteur à lit fluidisé de l'air en une quantité qui contient de 10 à 50 % de la quantité d'oxygène nécessaire, le reste de la quantité d'oxygène étant amené avec le gaz secondaire, on introduit un matériau solide contenant du carbone, ayant une grande réactivité et une faible réactivité, dans la partie inférieure du réacteur à lit fluidisé, en-dessous du point d'amenée du gaz secondaire, en utilisant en tant que matériau à faible réactivité, un charbon à faible teneur en gaz ou dégazé contenant moins de 10 % de constituants volatils, jusqu'à 20 % du matériau contenant du carbone, introduit dans la partie inférieure du réacteur à lit fluidisé, étant constitués d'un matériau contenant du carbone et ayant une faible réactivité, on ajuste la quantité du matériau solide contenant du carbone et tel qu'ajouté de façon, grâce à une combustion principale du matériau contenant du carbone et ayant une grande réactivité, qu'on ajuste la température à une valeur de 900 à 1100°C pour un rapport CO/CO₂ de 0,5 à 1,5.

2. Procédé de traitement de résidus d'usines sidérurgiques contenant des oxydes de fer, du zinc et du plomb, par traitement thermique dans un lit fluidisé circulant à haute température et dans des conditions réductrices, où le zinc et le plomb sont volatilisés et les oxydes de fer supérieurs sont réduits au maximum jusqu'à FeO, et le zinc et le plomb évaporés sont séparés de l'effluent gazeux après un refroidissement ; on introduit un gaz de fluidisation dans la partie inférieure du réacteur à lit fluidisé du lit fluidisé circulant ; on ajuste dans la partie inférieure du lit fluidisé une teneur en carbone solide de 5 à 30 % ; on ajuste le potentiel de réduction dans la partie inférieure du réacteur à lit fluidisé, grâce au choix de la quantité et de la composition du gaz de fluidisation, de façon qu'au moins 80 % du fer contenu se présentent sous forme de Fe²⁺, au maximum 1 % sous forme de fer métallique et le reste sous forme de Fe³⁺ ; on introduit dans la partie supérieure du réacteur à lit fluidisé un gaz secondaire contenant de l'oxygène ; on introduit un matériau contenant du carbone dans la partie inférieure du réacteur à lit fluidisé, en-dessous du point d'amenée du gaz secondaire, mais en ne poursuivant la formation du CO₂ que jusqu'à ce que le zinc métallique ne se réoxyde pas ; on envoie dans le cyclone de recyclage du lit fluidisé circulant la suspension soutirée de la partie supérieure du réacteur à lit fluidisé, et on l'y débarrasse presque complètement des matières solides ; on renvoie les matières solides ainsi séparées dans le réacteur à lit fluidisé de façon que, à l'intérieur du lit fluidisé circulant, le débit horaire de matière solide soit au moins cinq fois supérieur au poids de matières solides se trouvant dans le réacteur à lit fluidisé ; on refroidit le gaz sortant du cyclone de recyclage à une température à laquelle le zinc métallique est oxydé en ZnO et les composés du zinc et du plomb sous forme de poudre sont séparés du gaz, caractérisé en ce que on introduit un matériau solide contenant du carbone, ayant une grande réactivité et une faible réactivité, dans la partie inférieure du réacteur à lit fluidisé, en-dessous du point d'amenée du gaz secondaire, en utilisant en tant que matériau à faible réactivité, un charbon à faible teneur en gaz ou dégazé contenant moins de 10 % de constituants volatils, jusqu'à 20 % du matériau contenant du carbone, introduit dans la partie inférieure du réacteur à lit fluidisé, étant constitués d'un matériau contenant du carbone et ayant une faible réactivité, on ajuste la quantité du matériau solide contenant du carbone et tel qu'ajouté de façon, grâce à une combustion principale du matériau contenant du carbone et ayant une grande réactivité, qu'on ajuste la température à une valeur de 900 à 1100°C pour un rapport CO/CO₂ de 0.5 à 1,5, et en ce que la plus grande partie de l'effluent gazeux est, après élimination de la vapeur d'eau et du CO₂, renvoyée en recirculation en tant que gaz de fluidisation, et que l'on introduit en tant que gaz secondaire un gaz contenant de l'oxygène, contenant plus de 50 % en volume d'oxygène.

3. Procédé selon la revendication 1 ou 2, caractérisé en ce qu'on utilise une partie du matériau contenant du carbone et ayant une réactivité élevée avec une granulométrie inférieure à 10 mm et le matériau contenant du carbone et ayant une faible réactivité avec une granulométrie inférieure à 2 mm.

4. Procédé selon l'une des revendications 1 à 3, caractérisé en ce qu'une partie du matériau contenant du carbone, ayant une granulométrie inférieure à 1 mm, est mélangée aux résidus, l'addition de matériau contenant du carbone est au maximum de 10 % en poids par rapport au mélange, et le mélange est soumis à une micro-agglomération.

5. Procédé selon l'une des revendications 1 à 4, caractérisé en ce qu'on ajoute une calamine de laminage, à fine granulométrie et contenant de l'huile.
